# EUROPEAN PATENT APPLICATION

(11) **EP 0 547 512 A1**
(43) Date of publication of application: **23.06.1993**
(21) Application number: 92121098.5
(22) Date of filing: 10.12.1992
(51) Int. Cl.: B01D 29/33, B01D 36/00, C23F 1/46, H01M 6/50, H01M 6/06

(54) **Crystallizer filter**

(30) Priority: 13.12.1991 US 806992
(71) Applicant: ELTECH SYSTEMS CORPORATION, Boca Raton, FL 33434 (US)
(72) Inventor: Coin, Richard, Mentor, Ohio 44060 (US); Gregg, Kenneth J., Concord, Ohio 44060 (US); Niksa, Marilyn J., Concord, Ohio 44077 (US); Noscal, Jay M., Jefferson, Ohio 44047 (US)
(74) Representative: Huber, Bernhard, Dipl.-Chem.

(57) **Abstract**

The present invention resides in an improved method and apparatus for the crystallization and filtration of a crystallizable material from a solution in which the crystallizable material is dissolved. The solution is supersaturated with the crystallizable material. The solution is fed through a filter having a layer of seed material thereon. The depth of the layer of seed material and the rate of flow of solution through the seed layer allow the crystallization of the crystallizable material to take place within the layer of seed material. The crystallization is allowed to proceed until a bed of crystals of the crystallizable material is formed on the filter surface. A preferred filter material is a thin, flexible, polymeric material which is essentially two-dimensional. The filter is back-flushed removing the bed of the crystallizable material from the filter surface. Enough crystals remain on the filter surface to function as a seed layer for the formation of a new bed of crystals of the crystallizable material with the flow of additional solution through the filter.

## Description

### Technical Field

The present invention relates to the continuous removal of a metal hydroxide from a supersaturated alkaline solution of the hydroxide. The removal is by crystallization of the metal hydroxide forming a precipitate and filtration of the precipitate from the alkaline solution. The present invention is particularly applicable to the removal of a precipitate of alumina trihydrate from a potassium hydroxide electrolyte circulated through an aluminum-air battery.

### Background of the Invention

In the operation of an aluminum-air battery, having an aluminum anode, aluminum is dissolved, both Faradaically and by corrosion, in the electrolyte which is circulated through the battery. The Faradaic reaction, using a potassium hydroxide electrolyte, is:

*Al* + *KOH* + 3*OH⁻ → KAl(OH)₄* + 3*e⁻*

If the aluminate is allowed to build-up in the electrolyte, the free OH⁻ concentration of the electrolyte is reduced. This in turn causes a decrease in the conductivity of the electrolyte and in the battery performance.

In order to regenerate the electrolyte with respect to the concentration of hydroxyl ions, potassium aluminate is converted to potassium hydroxide and alumina trihydrate crystals:

2*KAl(OH)₄ →* 2*KOH* + *Al₂O₃ ·* 3*H₂O*

The fine crystals of alumina trihydrate sometimes referred to as hydrargillite or gibbsite form a precipitate which has to be removed from the electrolyte to prevent a decrease in the electrolyte conductivity, plugging of flow channels, and possible erosion of battery components. When a potassium hydroxide electrolyte is used, the precipitate is in the form of very small particles having an average particle size of about 0.5-20 microns. In addition, the particles have a needle-like configuration. The particles, as a consequence, are difficult to separate from the mother liquor. Such particles may settle in a non-agitated solution at a rate of about 20 millimeters per hour. This is very slow and would require the use of a large settling tank and long residence time.

A substantial amount of effort in the past has been directed toward techniques to allow the alumina trihydrate crystals to grow in size (agglomerate), for instance to an average particle size of about 30 to 35 microns. This is disclosed in two papers by Halfon et al. in "The Canadian Journal of Chemical Engineering", Volume 54, June, 1976, pages 160-172. By producing larger crystals, it was felt that the size of the crystallizer could be reduced. However, most of the success experienced with agglomeration during crystallization has been with systems where the electrolyte is a sodium hydroxide solution. Also, the growth of crystals to large size has been found to be detrimental to the kinetics of the crystallization process.

As a general rule, if the separators are made large enough, and the components expensive enough, or if the system is provided with sufficient power, as for example with centrifugal separation, some separation of the hydrargillite crystals from the electrolyte can be achieved. However, aluminum-air batteries typically find application as relatively small power sources or propulsion sources for electric vehicles. This requires a compact separation system, particularly one which consumes only a small amount of the power generated by the battery.

### Description of the Prior Art

Published Swiss Application No. 1325/84-3 discloses a process for surface cleaning aluminum using a dilute alkaline bath. Dissolved aluminum hydroxide accumulates in the bath. Alkaline salts such as sodium carbonate are added to the bath to facilitate precipitation of solids. Aggregation of the precipitate is influenced by the presence of complexing agents such as sodium gluconate. No details concerning actual filtration of the bath are given.

European Patent Application Publication No. 0114969 discloses a process and reactor for precipitating an aluminate from an alkaline solution by adding an alkaline earth metal hydroxide such as calcium hydroxide to the solution. The alkaline earth metal hydroxide precipitate is said to be especially useful to reduce the aluminum content of an alkaline electrolyte solution for batteries having aluminum anodes. A preferred electrolyte solution is indicated to be potassium hydroxide. The reactor contains a filter such as glass wool to filter the precipitate from the alkaline solution. However, no provision is made for cleaning the glass wool filter.

U.S. Patent No. 4,994,332, assigned to the assignee of the present application, discloses a filter system for continuously removing a metal hydroxide precipitate from an alkali metal hydroxide solution. A tank is provided to contain the metal hydroxide solution. Seed crystals can be added to the metal hydroxide solution to promote crystallization within the tank. A preferred filter is a sintered powder metal cartridge. The alkali metal hydroxide solution, containing crystals therein, is impacted onto the filter surface by pumping the liquid through the filter. The crystals agglomerate on the surface. Means are provided to remove the agglomerated precipitate from the filter surface, for instance by back-flushing, and to then separate the agglomerated precipitate from the alkali metal hydroxide solution, for instance by settling. The agglomerated precipitate has a particle weight to surface area ratio effective for said separation.

### Summary of the Invention

The present invention resides in an improved method for the crystallization and filtration of a crystallizable material from a solution in which the crystallizable material is dissolved. The solution is supersaturated with the crystallizable material. The solution is fed into a vessel having an outlet and through a filter at the vessel outlet. The surface of the filter is pre-seeded with a layer of seed material . Preferably, the seed material is of the same composition as the crystallizable material in said solution. Crystallization of the crystallizable material takes place within the layer of seed material forming a bed of crystals of the crystallizable material on the filter surface. The crystallization is allowed to proceed until a predetermined pressure drop across the bed of crystals is reached. The filter is then back-flushed removing the bed of crystals from the filter surface. Enough crystals remain on the filter surface to function as a seed layer for the formation of a new bed of crystals of the crystallizable material with the flow of additional solution through the filter.

The filter is essentially two-dimensional comprising pores having a small aspect (length to diameter) ratio effective to prevent plugging by crystals of the crystallizable material within the filter pores. A preferred filter material is flexible. Preferably, the filter material is hydrophobic.

The back-flushing preferably is carried out for a time and at a back-flow pressure effective to reduce the pressure drop through the filter to essentially zero.

A particularly preferred filter is a thin flexible polytetrafluoroethylene membrane having an air permeability in the range of 1-10 cfm (0.5-5 liters per second).

In a preferred embodiment of the present invention, the solution comprises a potassium hydroxide electrolyte and the crystallizable material is alumina trihydrate, which is present in solution as the aluminate ion.

The present invention also resides in an improved apparatus for the crystallization and filtration of a crystallizable material from a solution in which the crystallizable material is dissolved. The solution is supersaturated with the crystallizable material. The apparatus comprises a vessel including an inlet and an outlet. Means are provided for introducing the solution into said vessel. The apparatus comprises a filter at the vessel outlet. The surface of the filter is pre-seeded with a layer of seed material. Preferably, the seed material is of the same composition as the crystallizable material in the solution. The solution flows from the vessel through the filter, causing crystallization of the crystallizable material to take place within the layer of seed material forming a bed of crystals of the crystallizable material on the filter surface. Means are provided to measure the pressure drop across the bed of crystals. The crystallization is allowed to proceed until a predetermined pressure drop across the bed of crystals is reached. The apparatus comprises means for causing the removal of the bed of crystals from the filter surface when said predetermined pressure is reached. Enough crystals remain on the filter surface, following said removal, to function as a seed layer for the formation of a new bed of crystals of the crystallizable material with the flow of additional solution through the filter.

A preferred filter is essentially two-dimensional comprising pores having a small aspect (length to diameter) ratio effective to prevent plugging by crystals of the crystallizable material within the filter pores. A preferred filter material is flexible. Preferably, the filter material is hydrophobic.

A particularly preferred filter is a thin flexible polytetrafluoroethylene membrane having an air permeability in the range of 1-10 cfm (0.5-5 liters per second).

A preferred means for removing the bed of crystals from the filter surface comprises means for back-flushing the filter.

In a preferred embodiment of the present invention, the solution is a potassium hydroxide electrolyte and the crystallizable material is alumina trihydrate which is present in solution as the aluminate ion.

### Brief Description of the Drawings

Further features of the present invention will become apparent to those skilled in the art to which the present invention relates from reading the following specification with reference to the accompanying drawings, in which:
Fig. 1 is a schematic flow diagram illustrating a preferred flow system for filtering alumina trihydrate from a potassium hydroxide electrolyte of an aluminum-air battery in accordance with the present invention;
Fig. 2 is a scanning electron microscope (SEM) plan view of the surface of a filter of the flow system of Fig. 1 taken at a magnification of 1,500X;
Fig. 3 is a scanning electron microscope (SEM) plan view of the surface of the filter of Fig. 2 taken at a magnification of 1,000X following a cycle of filtration and then back-flush of the filter; and
Fig. 4 is a diagram showing the potassium aluminate ("aluminate") concentration in moles per liter and filter pressure drop in PSIG as a function of time in a test conducted using the flow system of Fig. 1.

### Description of Preferred Embodiments

The present invention is broadly applicable to the precipitation or crystallization of a crystallizable material from a solution in which the crystallizable material is dissolved, and to the separation of the crystallized material from the solution following crystallization. In the present application, the terms "crystallization" and "precipitation" are used interchangeably.

The present invention is applicable to generating a metal hydroxide precipitate by crystallization from an alkali metal hydroxide solution and filtering the precipitate from the solution. The present invention is particularly applicable where the solution is a potassium hydroxide solution. However, the present invention is also applicable where the solution is sodium hydroxide, or a mixture of potassium hydroxide and sodium hydroxide. However, for convenience, reference herein will be made only to potassium hydroxide.

The present invention is particularly useful for removing a metal hydroxide precipitate from an electrolyte which is circulated through a metal-air battery. Examples of metals used as anodes in a metal-air battery are aluminum, zinc, iron, and lithium. For purposes of the present application, the term "air" means any reducible oxygen containing compound and includes such compounds as air, oxygen, and a peroxide.

The present invention is particularly useful in an electrolyte circulation system for an aluminum-air battery. Examples of useful aluminum-air batteries that may be employed with the electrolyte circulation system of the present invention are disclosed in U.S. Patents Nos. 4,828,939, 4,927,717, and 4,950,561, all assigned to the assignee of the present application. The disclosures of the above U.S. patents are incorporated herein by reference. Details of the aluminum-air battery are not a part of the present invention and will not be described in detail. Broadly, the aluminum-air battery comprises one or more cells. If the battery comprises a plurality of cells, the cells can be electrically connected together either in series or in parallel. The cells comprise replaceable aluminum anodes and are essentially closed to atmosphere. A closed-loop electrolyte system is provided for circulating a potassium hydroxide electrolyte through the cells. In the process of flow through the cells, the electrolyte dissolves aluminum from the aluminum anodes both Faradaically and by a corrosion process. The Faradaic reaction, using a potassium hydroxide electrolyte, may be represented as:

*Al* + *KOH* + 3*OH⁻ → KAl(OH)₄* + 3*e⁻*

As the aluminate is allowed to build-up in the electrolyte, the free OH⁻ concentration of the electrolyte is reduced. This, in turn, causes a reduction in the conductivity of the electrolyte and an increase in the polarization at the aluminum anode. These combined effects cause a performance loss in terms of the cell voltage. In order to regenerate the electrolyte, the aluminate must be converted to potassium hydroxide and alumina trihydrate per the following reaction:

2*KAl(OH)₄ →* 2*KOH* + *Al₂O₃ ·* 3*H₂O*

Crystallization of the alumina trihydrate from the electrolyte also requires separation of the crystalline precipitate from the electrolyte. In accordance with the present invention, this is accomplished by filtration.

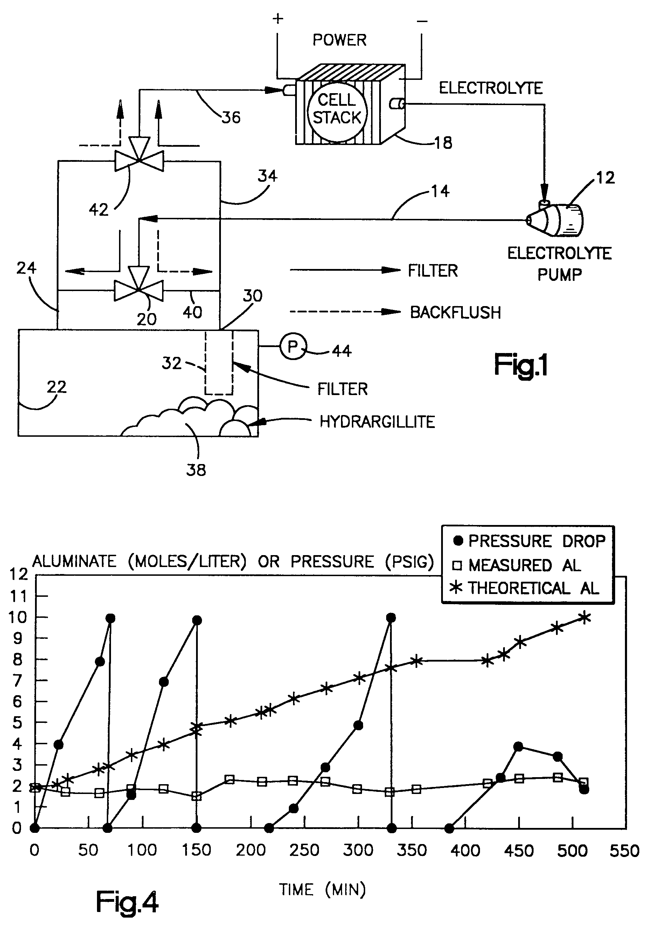

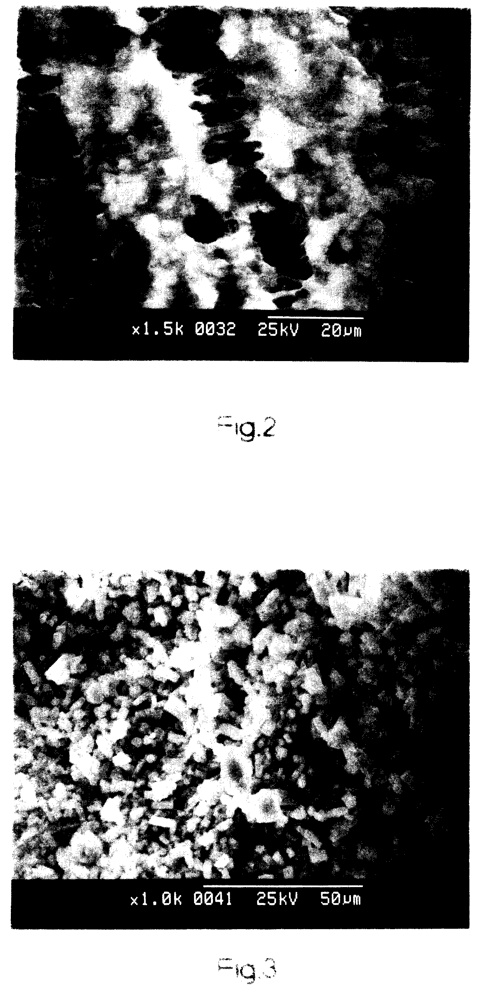

Referring to Fig. 1, a potassium hydroxide electrolyte is circulated by a pump 12 in a line 14 leading from the outlet of an aluminum-air cell stack 18. The electrolyte contains a high concentration of dissolved aluminate from the cells of the cell stack 18. It is well known that the precipitation or crystallization of alumina trihydrate from a metal hydroxide solution will not take place readily by spontaneous nucleation. It is also known that the electrolyte is supersaturated; i.e., the concentration of aluminate is significantly higher than the equilibrium solution concentration at the temperature. The pump 12 need not be a high capacity pump. The circulation rate of electrolyte is a function of the size of the battery. For an aluminum-air battery, such as disclosed in U.S. Patents Nos. 4,828,939, 4,927,717, and 4,950,561, comprising, by way of example, a ten cell 400 watt stack, the size of each cell being about 200 square centimeters, the rate of circulation is about 40 to 60 liters per hour.

The electrolyte in line 14, containing dissolved aluminate is passed by means of pump 12 to a three-way valve 20. The three-way valve 20, in its normal position, directs the flow through line 24 into a vessel 22. The vessel 22 is a compact, closed tank that is small enough that it may be mounted directly on the side of the cell stack 18, if desired.

The vessel 22 has an outlet 30 and a filter 32 at the outlet. The filter 32 is cylindrical in shape, and has an outer cylindrical surface exposed to the electrolyte within the vessel 22. In a manner to be described, alumina trihydrate is formed in a bed on the outer cylindrical surface of the filter 32, and is separated by the filter from the electrolyte which flows through the filter. The filtered electrolyte then flows through outlet 30 and back to the cell stack 18 through lines 34 and 36.

Periodically, the bed of alumina trihydrate which is collected on the filter 32 is flushed from the filter and allowed to settle to the bottom of the tank 22 forming a pile 38 of alumina trihydrate on the bottom of the vessel 22. The flushing of the alumina trihydrate from the filter 32 is accomplished by moving the valve 20 so that electrolyte in line 14, from the cell stack 18, flows in line 40 directly to the outlet 30 and to the interior of the filter 32. This causes the electrolyte to pass through the filter 32 in a reverse direction and at a pressure effective to remove alumina trihydrate from the outer surface of the filter. The pile of alumina trihydrate 38, at the bottom of the vessel 22, can be removed periodically from the vessel 22 by a suitable gate or other means, not shown.

Lines 34 and 36, between the outlet 30 of the vessel 22 and the cell stack 18 are connected together by a three-way valve 42 similar to valve 20. The three-way valve 42 also has a port connected with line 24. Electrolyte, which is back-flushed through the filter 32, flows into vessel 22, and from the vessel, in line 24, through valve 42. Valve 42 is shifted to accommodate the flow, so that the flow goes from the valve 42 into the cell stack 18.

Normally, the operation of the above system is in a filtration mode with the flow through the filter 32 being from the outside inwardly, and is carried out in an essentially continuous manner. The back-flush through the filter 32 need be carried out only intermittently, for a short period of time, typically about thirty seconds, when the build-up of the bed of alumina trihydrate on the filter 32 is substantial enough to cause a significant pressure drop through the filter 32. The pressure drop is determined by means of a pressure gauge 44 mounted on vessel 22. The pressure downstream of the vessel outlet 30 is essentially atmospheric. The amount of pressure drop, to be significant, is somewhat arbitrary. Successful results have been obtained, in the practice of the present invention, by causing the back-flush to take place at a pressure drop of about 10 psi through the filter.

Movement of the valves 20 and 42 from a normal filtration mode of operation to a back-flush mode of operation can be carried out manually when the pressure in gauge 44 reaches a predetermined value. Alternatively, the valves 20 and 42 can be moved between a normal filtration mode of operation and a back-flush mode of operation automatically at predetermined pressure drops by suitable process controls (not shown).

The filter 32 preferably is a membrane filter of a flexible synthetic polymeric material. Preferably, the polymeric material is hydrophobic. A preferred polymeric material is polytetrafluoroethylene marketed by E. I. Dupont de Nemours under the trademark TEFLON. A preferred membrane is one manufactured from TEFLON and marketed by W. L. Gore & Associates Ltd. under the trademark GORE-TEX. These membranes are very thin and flexible being essentially two-dimensional comprising pores having a small aspect (length to diameter) ratio. A preferred membrane has an air permeability in the range of 1-10 cfm (0.5-5 liters per second). Normally, the polytetrafluoroethylene membranes are bonded to a felt or fabric backing for strength. The preferred membrane has a nominal particle retention of at least about 90% of a three micron latex bead.

The size of the filter 32 is a function of the rate of recirculation of the electrolyte, which can be dependent upon the rate of anode dissolution. A critical feature of the present invention is the development and entrapment of crystals of alumina trihydrate in the seed bed rather than elsewhere, for instance within the vessel 22 or within the pores of the filter 32. This is accomplished by pre-seeding the filter surface, on the side of the filter which is exposed to electrolyte within the vessel 22.

The seed used preferably is an alumina trihydrate precipitated from the same electrolyte as that in the battery. However, it is within the scope of the present invention that another seed material, insoluble in the electrolyte, could be used. Examples are an alumina marketed by Fisher Scientific Corporation having a particle size distribution of one (1) to forty (40) microns and an average particle size of ten (10) to fifteen (15) microns, and calcium oxide.

Formation of the seed layer preferably is carried out ex-situ, in the sense that the seed layer preferably is formed on the filter before placing the filter, with seed layer thereon, in the vessel 22. This is accomplished by passing a slurry having alumina trihydrate crystals, or other seed material, therein through the filter, and then allowing the filter and seed material thereon to dry. The dried filter, with the seed layer thereon, is then inserted into the vessel 22. Alternatively, formation of the seed layer can be accomplished in-situ, by placing the filter in the vessel 22, and then forming the seed layer on the filter while it is in the vessel 22.

This latter procedure would require passing an initial slurry through the filter, having undissolved crystals of alumina trihydrate or other seed material therein, before operating the battery.

The pre-seeding forms only a thin layer on the filter surface. The depth of the seed layer need not be great. A depth of about 50 microns up to about one to two millimeters suffices. This depth is insufficient to obtain a significant pressure drop reading in pressure gauge 44.

Once the seed layer is established on the surface of the filter 32, the filter can then be used for crystallization and filtration of the electrolyte which is supersaturated with potassium aluminate. The flow rate of the electrolyte through the filter is low enough to provide a relatively long dwell time of electrolyte in the seed layer. As the electrolyte flows through the seed layer of alumina trihydrate, the crystallization takes place around the seeds in the seed layer. This results in the formation of a bed of alumina trihydrate on the surface of the filter.

Normally, the bed is allowed to grow until a predetermined pressure drop across the bed is reached. The depth of the bed is not critical except with regard to the pressure drop which results. The depth will vary depending upon the material crystallizing out of the electrolyte. Generally, the bed will reach a depth of about 1-2 centimeters.

Once the predetermined pressure drop is reached, the filter is back-flushed in the manner indicated above. The use of a thin flexible membrane as the filter enhances the back-flushing step. In the transfer from a filtration mode to a back-flushing mode, the filter is flexed from one configuration to another. This flexing is believed to assist in dislodging the bed of crystals from the filter surface. In addition, it is believed that the flexing also changes the configuration of the pores of the filter causing crystals trapped in the pores to be dislodged from the pores, preventing plugging of the filter over a long period of operation.

Following back-flush, the filter does not have to be pre-seeded again. Even though the back-flush removes the bed of alumina trihydrate crystals from the surface of the filter, enough seed remains on the filter to provide a seed layer for the next filtration mode. The depth of the seed layer need not be substantial. A depth of about 50 microns suffices. At this depth, the layer may be only barely ascertainable visually. The seed layer causes no ascertainable reading in pressure gauge 44. The seed layer continues to exist throughout numerous cycles of the filtration mode of operation followed by the back-flush mode of operation.

The following example illustrates the present invention.

### Example

An aluminum-air battery comprised a single cell. The cell had an anode area of 370 cm² and an electrolyte volume of 2.5 liters. The anode was fabricated from an alloy of aluminum containing manganese, indium, and magnesium. A 3.6 molar potassium hydroxide electrolyte was continuously circulated through the battery. The electrolyte contained initially 1.93 Molar of aluminum. The rate of circulation was maintained at about 3 ± 0.2 liters per hour. The electrolyte was maintained at a temperature of about 65°C.

The filter 32 was a Teflon filter marketed by W. L. Gore & Associates Ltd. under the trademark GORE-TEX. The filter had an air permeability rating of 8-10 cfm (4-5 liters per second). The filter had the Teflon filter membrane bonded to a polypropylene fabric backing, the resulting filter being essentially two-dimensional in that the filter (membrane plus backing) had only a 0.06 inch thickness. The filter was maintained in a cylindrical shape by a rigid cylindrical support and had a surface area of about 202 cm². The support is not shown in Fig. 1. The support had an open structure and provided no filter function.

Referring to Fig. 2, the nature of the filter is shown. The filter comprised fused areas of Teflon connected by a plurality of thin strands which formed a plurality of small pores between the fused areas. The pores measured less than 20 microns in any direction, with most of the pores being much smaller in any direction. In essence, the filter was two dimensional, the pores having only a small aspect (length to diameter) ratio.

The outer filter surface, on the side of the filter which was exposed to the electrolyte in vessel 22, was pre-seeded with alumina trihydrate. This was accomplished by passing a slurry containing alumina trihydrate crystals through the filter (from the outside in). The flow rate was five liters per hour. The crystal pre-seed had an average particle size of 10-15 microns. Formation of the crystal layer on the filter was stopped when the pressure drop across the filter reached 10 psi. The filter was then back-flushed dislodging the crystal layer from the filter. A layer of seed crystals remained on the filter. The amount of seed crystals remaining on the surface of the filter was insufficient to cause a detectable pressure drop with a flow rate of about three liters per hour through the filter.

A test was conducted for about eight and one-half hours using a pre-seeded filter similar to the filter of Fig. 2. During the test, the pressure drop across the filter and aluminate concentration, at the inlet of cell stack 18, were measured as a function of time. During the test period, the filter 22 was back-flushed when the pressure drop across the filter reached 10 psi. This occurred at about 70 minutes, 150 minutes, and 300 minutes during the test period. The back-flush was carried out at about 4-5 psi for less than one minute until the pressure drop across the filter reached zero. Within about 35 seconds of the start of back-flush, in each instance, the bed of alumina trihydrate broke away from the surface of the filter 32 and settled to the bottom of vessel 22. The break-away of alumina trihydrate from the filter surface was generally in the form of relatively large agglomerated clumps of alumina trihydrate.

Referring to Fig. 3, the nature of the layer of seed crystals, following bed removal, is shown. Although the layer of seed crystals was nearly indistinguishable with the naked eye, it was clearly distinguishable at 1,000X magnification. The layer had some thickness, approximately 50 microns. The seed crystals were very small, mostly less than 20 microns, and were in a loosely packed array.

At the end of each back-flush, filtration was resumed. The results of the test are shown in Fig. 4.

Referring to Fig. 4, the aluminate concentration (measured Al) remained essentially constant at about 2 moles per liter throughout the test. As the crystal bed, at the surface of the filter, grew, the pressure drop across the filter increased to about 10 psi. The drop in pressure to zero with each back-flush indicates that the back-flush was successful. With each back-flush, the bed of crystals was essentially removed so that the filter appeared clean to the naked eye. This essentially complete removal of the crystal bed was confirmed by the return of the pressure drop, across the filter, to zero. Some self-cleaning of the filter, i.e., some crystal bed removal, without back-flushing, was evident toward the end of the test as indicated by the drop in pressure at the test end.

However, a layer of crystals remained on the surface of the filter at the end of each back-flush. The amount of crystals remaining was sufficient to provide seed for crystallization in the next cycle, holding the aluminate concentration throughout the test at about two moles per liter as shown in Fig. 4.

Fig. 4 also shows the theoretical aluminate concentration (theoretical Al) in the electrolyte, had no crystallization taken place. As shown in Fig. 4, the aluminate concentration would have quickly risen within several hours to the point where the fuel cell performance would have been substantially degraded.

Figs. 2 and 3 illustrate the critical features of the present invention. By employing a filter, as shown in Fig. 2, having pores of essentially no aspect (length to diameter) ratio, there is insufficient pore depth for the filter pores to plug. Thus, the filter does not plug. Whatever crystals do become lodged in the filter pores are removed on back-flush due to the flexibility of the filter. By employing a seed layer on the surface of the filter, having some thickness, there is sufficient depth for the formation of crystals in the seed layer and to trap the crystals, and a bed of crystals forms at the surface of the filter. This bed is readily removed from the filter, as large aggregates, when the pressure drop across the filter exceeds a predetermined level.

From the above description of the invention, those skilled in the art will perceive improvements, changes and modifications. Such improvements, changes and modifications within the skill of the art are intended to be covered by the appended claims.

## Claims

1. A method for the crystallization and filtration of a crystallizable material from a solution in which the crystallizable material is dissolved, comprising the steps of:
providing a vessel for said solution, said vessel having an inlet and an outlet;
providing a filter at said vessel outlet, said filter having a layer of seed material thereon;
passing said solution through said layer of seed material and through said filter, the depth of the layer of seed material and the rate of flow of electrolyte through the seed layer allowing the crystallization of the crystallizable material to take place within the seed layer;
allowing the crystallization to proceed until a bed of crystals is formed on the filter surface establishing a predetermined pressure drop across the bed; and
back-flushing the filter at said predetermined pressure causing the removal of the bed of crystals from the filter surface;
enough of the crystals of the crystallizable material remaining on the filter surface following said back-flush to function as a seed layer for the formation of a new bed of crystals of the crystallizable material with the flow of additional solution through the filter surface.

2. The method of claim 1 wherein said filter is essentially two-dimensional comprising pores having a small aspect (length to diameter) ratio effective to prevent plugging by crystals of the crystallizable material within said pores.

3. The method of claim 2 wherein said filter is of a flexible material.

4. The method of claim 3 wherein said filter is of a hydrophobic material.

5. The method of claim 3 wherein said filter is a thin flexible film of polymeric material comprising fused areas connected by multiple thin strands defining said pores.

6. The method of claim 5 wherein said filter is a thin polytetrafluoroethylene membrane having an air permeability in the range of 1-10 cfm (0.5-5 liters per second).

7. The method of claim 1 wherein said back-flushing is carried out for a time and at a back-flow pressure effective to reduce the pressure drop through the filter to about zero.

8. The method of claim 1 wherein said solution is one or more of a potassium hydroxide electrolyte, sodium hydroxide electrolyte, or mixture thereof, and the crystallizable material is an alumina trihydrate, said seed material being of the same composition as the crystallizable material.

9. The method of claim 8 wherein said crystals are alumina trihydrate.

10. An improved apparatus for the crystallization and filtration of a crystallizable material from a solvent in which the crystallizable material is dissolved, comprising:
a vessel including an inlet and an outlet;
a filter at said outlet having a filter surface exposed to the solution within said vessel;
a layer of seed particles on said filter surface in an effective amount for the crystallization of said crystallizable material at said filter surface;
means for removing from said filter surface crystals of crystallizable material crystallized at said surface and leaving at said surface seed particles in an effective amount for crystallization of said crystallizable material in subsequent filtration following said removal.

11. The apparatus of claim 10 wherein said means for removing crystallized material from said filter surface comprises means for back-flushing said filter surface.

12. The apparatus of claim 11 including means for measuring the pressure drop across said filter and activating said back-flush when the pressure drop reaches a predetermined level.

13. The apparatus of claim 10 wherein said filter is essentially two-dimensional comprising pores having a small aspect (length to diameter) ratio effective to prevent plugging by crystals of the crystallizable material within said pores.

14. The apparatus of claim 13 wherein said filter is of a flexible material.

15. The apparatus of claim 14 wherein said filter is of a hydrophobic material.

16. The apparatus of claim 15 wherein said filter is a thin flexible film of polymeric material comprising a filter membrane of fused areas connected by multiple thin strands defining said pores, with said filter membrane being bonded to a fabric backing.

17. The apparatus of claim 16 wherein said filter comprises a thin polytetrafluoroethylene filter membrane and has an air permeability in the range of 1-10 cfm (0.5-5 liters per second).

18. A method for crystallization and filtration of a crystallizable material from a solution in which the crystallizable material is dissolved, said solution being supersaturated with the crystallizable material, comprising the steps of:
providing the apparatus of claim 10;
passing said solution through said layer of seed material and through said filter;
allowing the crystallization to proceed until a bed of crystals is formed on the filter surface establishing a predetermined pressure drop across the bed; and
actuating said means for removing causing the removal at said predetermined pressure drop of the bed of crystals from said filter surface.

19. A unitized battery and separation apparatus comprising a cell stack and the apparatus of claim 10, wherein the vessel of the apparatus of claim 10 is affixed to said cell stack.

20. The apparatus of claim 19 wherein said vessel is a compact, closed tank mounted directly on said cell stack.

21. An improved apparatus for the crystallization and filtration of a crystallizable material from a solvent in which the crystallizable material is dissolved, said solvent plus material being a supersaturated solution of said crystallizable material, the improved apparatus comprising:
a filter having a filter surface exposed to said supersaturated solution;
a layer of seed particles on said filter surface in an effective amount for the crystallization of said crystallizable material at said filter surface;
said filter being essentially two-dimensional.

22. The apparatus of claim 21 wherein said filter is of a flexible material.

23. The apparatus of claim 22 wherein said filter has openings measuring less than 20 microns in any dimension.

24. The apparatus of claim 22, wherein the depth of the seed layer is less than 2 millimeters.

25. The apparatus of claim 22 wherein said filter is of a hydrophobic material.

26. The apparatus of claim 22 wherein said filter is a thin flexible film of polymeric material comprising fused areas connected by multiple thin strands defining pores having a small aspect (length to diameter) ratio.

27. The apparatus of claim 22 wherein a major amount of said seed particles have a size less than 20 microns.

28. In the method for the crystallization and filtration of a crystallizable material from a solvent in which the crystallizable material is dissolved, said solvent plus material being a supersaturated solution of said crystallizable material, the improvement comprising:
passing said solution through a layer of seed material deposited on the surface of a filter, then through said filter, the depth of the layer of seed material and the rate of flow of solution through the seed layer allowing the crystallization of the crystallizable material to take place within the seed layer; and
allowing the crystallization to proceed until a bed of crystals is formed on the filter surface;
said filter being essentially two-dimensional.

29. The method of claim 28 wherein said filter is of a flexible material.

30. A method for the crystallization and filtration of a crystallizable material from a solvent in which the crystallizable material is dissolved, said solvent plus material being a supersaturated solution of said crystallizable material, comprising the steps of:
providing a vessel for said solution, said vessel having an inlet and an outlet;
providing a filter surface at said vessel outlet, said filter surface having a layer of seed material thereon of the same composition as the crystallizable material in said solution; and
passing said solution through said layer of seed material and through said filter, the depth of the layer of seed material and the rate of flow of electrolyte through the seed layer allowing the crystallization of the crystallizable material to take place within the seed layer;
said filter being essentially two-dimensional.

31. The method of claim 30 wherein said filter surface is provided that has filter openings measuring less than 20 microns in any dimension and the depth of the seed layer is less than 2 millimeters.

32. The method of claim 30 wherein said solution is passed that contains particles having an average size of about 0.5-20 microns and includes particles that have a needle-like configuration.

33. A method for the crystallization and filtration of a crystallizable material from a solvent in which the crystallizable material is dissolved, said solvent plus material being a supersaturated solution of said crystallizable material, comprising the steps of:
passing said solution through a layer of seed material on a filter and then through said filter, the depth of the layer of seed material and the rate of flow of electrolyte through the seed layer allowing the crystallization of the crystallizable material to take place within the seed layer;
allowing the crystallization to proceed until a bed of crystals is formed on the filter surface establishing a predetermined pressure drop across the bed;
back-flushing the filter at said predetermined pressure causing the removal of the bed of crystals from the filter surface; and
permitting said back-flushing to continue until said pressure drop reaches approximately zero, enough of the crystals of the crystallizable material remaining on the filter surface to function as a seed layer for the formation of a new bed of crystals of the crystallizable material with the flow of additional solution through the filter surface;
said filter being a flexible filter and essentially two-dimensional.

34. The method of claim 33 wherein the transfer from a filtration mode to a back-flushing mode flexes the filter from a first configuration to a second configuration.
